# EUROPÄISCHE PATENTSCHRIFT

(11) **EP 2 035 780 B1**
(45) Veröffentlichungstag und Bekanntmachung des Hinweises auf die Patenterteilung: **13.07.2011**
(21) Anmeldenummer: 07724785.6
(22) Anmeldetag: 02.05.2007
(51) Int. Cl.: G01C 22/02

(54) **ANHÄNGERFAHRZEUG MIT ANZEIGESYSTEM**
TRAILER WITH DISPLAY SYSTEM
REMORQUE AVEC SYSTÈME D'AFFICHAGE

(30) Priorität: 22.06.2006 DE 102006028584
(43) Veröffentlichungstag der Anmeldung: 18.03.2009
(73) Patentinhaber: WABCO GmbH, 30453 Hannover (DE)
(72) Erfinder: HEIDER, Joachim, 31226 Peine (DE); HEISE, Bernd, 30179 Hannover (DE); STENDER, Axel, 31787 Hameln (DE); WITTE, Norbert, 31867 Lauenau (DE)
(86) Internationale Anmeldenummer: PCT/EP2007/003859
(87) Internationale Veröffentlichungsnummer: WO 2007/147459

(56) Entgegenhaltungen:
- EP-A2- 0 809 216
- GB-A- 2 117 516
- US-A1- 2004 113 811
- ANONYMOUS: "Infomaster für Anhängefahrzeuge 446 303 ... ." WABCO PROSPEKT, [Online] August 1998 (1998-08), Seiten 1-2, XP002446211 Gefunden im Internet: URL:http://www.wabco.info/intl/pdf/820/000 /114/820_114.pdf?PHPSESSID=fc4d0acc79d0668 5e98985cc4038099b> [gefunden am 2007-08-09] in der Anmeldung erwähnt

## Beschreibung

Die Erfindung bezieht sich auf ein Anhängerfahrzeug mit Anzeigesystem gemäß dem Oberbegriff des Patentanspruchs 1.

Es besteht das Bedürfnis, bei Anhängerfahrzeugen von Nutzfahrzeugen für bestimmte Daten, wie zum Beispiel den Kilometerstand und den Zustand eingebauter Elektroniken des Anhängers, ein vom Motorwagen separates Anzeigesystem vorzusehen. Dies ist insbesondere wichtig für den Kilometerstand des Anhängers, da dieser oftmals hinter verschiedenen Zugfahrzeugen läuft, und deshalb die Kilometerstände von Zugfahrzeug und Anhänger im Allgemeinen nicht übereinstimmen. Durch den so feststellbaren Kilometerstand des Anhängerfahrzeugs können beispielsweise dessen Wartungsabstände genauer ermittelt werden.

Es sind bereits derartige Anzeigesysteme bekannt. So ist aus der WO 99/44017 ein Odometer für einen Anhänger bekannt, bei dem ein Rad mit einem eigenen Rad-Drehzahlsensor ausgerüstet ist. Als Sensor kann dabei auch ein Drehzahlsensor eines Antiblockiersystems (ABS) dienen. Das Signal des Sensors wird über ein Kabel einer eigenen Odometer-Auswerte-Elektronik mit Mikrocontroller und einem Display zugeleitet. Die Elektronik enthält eine Batterie und eine Stromspar-Schaltung.

Es ist weiter ein Anzeigesystem für verschiedene Daten eines Anhängers bekannt (Prospekt "Infomaster" für Anhängerfahrzeuge 446 303 ..., Firma WABCO, von 8/98). Bei dem bekannten System für einen mit einem ABS (Antiblockiersystem) ausgerüsteten Anhänger wird das Drehzahlsignal eines ABS-Radgeschwindigkeitssensors des Anhängers sowohl zur ABS-Elektronik als auch zu einem separaten Anzeigegerät geleitet. Das Anzeigegerät ist dabei meist seitlich am hinteren Teil des Anhängers von außen sichtbar angebracht. Das Wegsignal für das Anzeigegerät wird dabei in der Regel von dem nächstgelegenen ABS-Radsensor abgeleitet. Hierzu wird ein sogenanntes Y-Kabel verwendet, welches Abzweigungen zur ABS Elektronik sowie zum Anzeigegerät aufweist. Ein solches Kabel ist jedoch umständlich zu verlegen und kostenaufwendig in der Herstellung.

Aus der US-A1-2004/113811 ist weiter ein Kilometerzähler für Anhängerfahrzeuge mit ABS bekannt. Dabei wird der Kilometerstand mittels der Signale der ABS-Radsensoren im ABS-Steuergerät berechnet und als codiertes Blinksignal an ein optisches oder akkustisches Ausgabegerät ausgegeben. Damit kann der Fahrer den Kilometerstand erkennen. Hierdurch wird ein besonderes Diagnose-Gerät mit Display zum Auslesen der Information eingespart.

Aus der EP 0809216 A2 ist ein Datenkommunikationsgerät für ein von einem Kraftfahrzeug gezogenes Fahrzeug bekannt. Zur manipulationssicheren Erfassung der zurückgelegten Wegstrecke des Fahrzeugs weist das Gerät eine eigene Stromversorgung, eine Datenerfassungseinheit, und eine Sende- und Empfangseinrichtung zur drahtlosen Übertragung von Daten auf eine externe Sende- und Empfangsstation auf.

Schliesslich ist aus der GB-A- 2 117 516 ein Anhängerfahrzeug bekannt, das mit einer Einrichtung zum Messen von zurückgelegten Distanzen ausgerüstet ist. Hierzu hat das Fahrzeug eine elektrisch gespeiste Einrichtung, welche mittels eines Näherungsschalters die Umdrehungen eines Rades erkennt, in eine Wegstrecke umrechnet, speichert, und auf einem Display anzeigt. Statt eines Näherungsschalters kann auch der Radgeschwindigkeitssensor eines ABS benutzt werden.

Der Erfindung liegt die Aufgabe zugrunde, einen einfachen Kilometerzähler zu schaffen, der ohne großen Verkabelungsaufwand installiert werden kann.

Diese Aufgabe wird durch die im Patentanspruch 1 enthaltende Erfindung gelöst. Die abhängigen Ansprüche enthalten zweckmäßige Weiterbildungen.

Dadurch, dass das Anschlusskabel des Radsensors nicht wie beim Stand der Technik direkt zum Anzeigegerät führt, sondern zunächst zur EBS/ABS-Elektronik geleitet wird, erhöht sich zwar insgesamt die Leitungslänge im Vergleich zur bekannten Bauweise. Da jedoch das aufwändige Y-Kabel entfällt, ergibt sich trotzdem eine Kostenersparnis, die bei den hier vorliegenden Massenbauteilen von Bedeutung ist.

Die Erfindung wird im Folgenden anhand einer Zeichnung näher erläutert.

Dabei zeigt die
- Fig. 1: eine schematische Darstellung eines pneumatischen Bremssystems mit EBS/ABS für ein Anhängerfahrzeug, und
- Fig. 2: eine schematische Darstellung des EBS/ABS mit angeschlossenem Anzeigegerät aus Fig. 1.

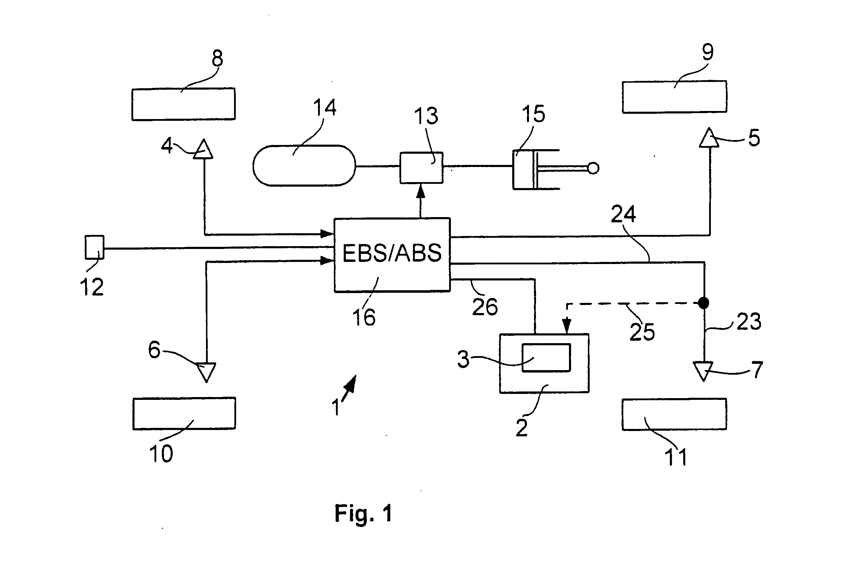

In der Fig. 1 ist das Anhängerfahrzeug mit (1) bezeichnet. Es besitzt Räder (8, 10) an der Vorderachse (VA) sowie Räder (9, 11) an der Hinterachse (HA). Die Drehzahlen der Räder werden in bekannter Weise mittels Radsensoren (4-7) abgefühlt. Diese übermitteln die jeweiligen Drehzahlinformationen an ein elektronisches Bremssystem (EBS) und/oder ein Antiblockiersystem (ABS) (16). Aus den empfangenen Raddrehzahlsignalen berechnet das genannte EBS/ABS in bekannter Weise Regelsignale, die einem oder mehreren Magnetregelventilen (13) zugeführt werden. Diese können die Druckluftzufuhr aus einem Vorratsbehälter (14) zu den Radbremsen (15) regulieren. Dabei werden in bekannter Weise die Bremszylinder von bei einer Bremsung rutschenden Rädern (8-11) druck- entlastet, um so ein Wiederanlaufen der Räder zu ermöglichen. Ein derartiges EBS/ABS ist z.B. aus der EP 966377 B1 bekannt.

Das EBS/ABS ist weiter mit einer Anschlussbuchse (12) versehen, welche im angekuppelten Zustand des Anhängers (1) an ein Zugfahrzeug (nicht dargestellt) mit einer entsprechenden Elektronik im Zugfahrzeug verbindbar ist. Über die Anschlussbuchse (12) können dem Zugfahrzeug Daten und Betriebszustand des Anhängerfahrzeugs (1) mitgeteilt werden. In umgekehrter Richtung kann das Zugfahrzeug dem Anhänger Befehle, beispielsweise zur Bremssteuerung oder zur Beleuchtung mitteilen. Weiter kann über die Buchse (12) auch eine Betriebsspannung vom Motorwagen zum Anhänger geleitet werden.

An das EBS/ABS des Anhängerfahrzeugs (1) ist weiter ein Anzeigegerät (2) angeschlossen, welches ein Display (3) aufweist. Auf diesem können Betriebszustände des Anhängerfahrzeugs (1), insbesondere dessen Kilometerstand abgerufen werden. Hierzu benötigt das Anzeigegerät (2) eine Information über die zurückgelegte Wegstrecke des Anhängerfahrzeugs (1), welches gemäß dem Stand der Technik dem Anzeigegerät (2) über einen (gestrichelt gezeichneten) Zweig (25) eines Y-Kabels (23, 24, 25) mitgeteilt wird. Durch die Erfindung kann der Zweig (25) jedoch entfallen.

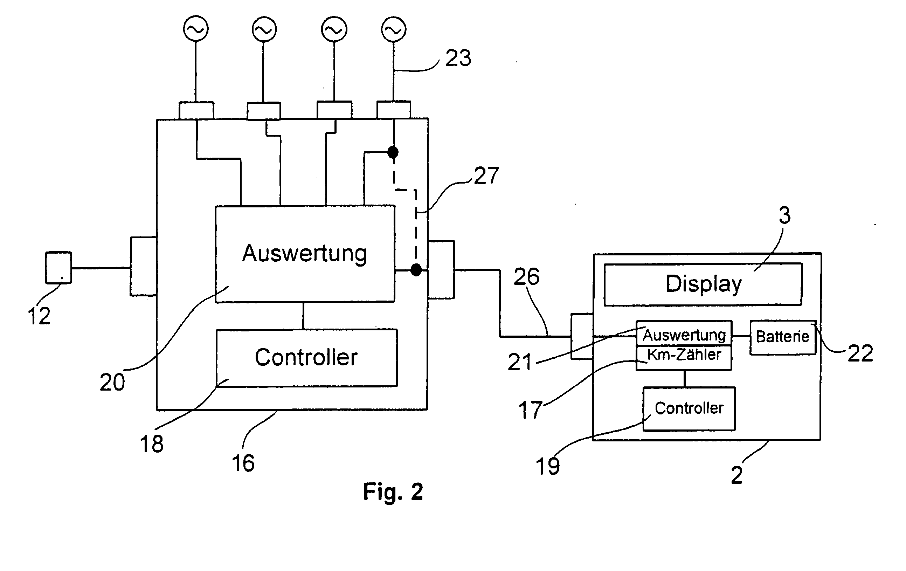

In der Fig. 2 ist das EBS/ABS (16) der Fig. 1 mit angeschlossenem Display (2) näher dargestellt. Wie bereits beschrieben, ist das EBS/ABS (16) über eine Anschlussbuchse (12) mit dem Motorwagen verbindbar. Weiter sind wie üblich die Radgeschwindigkeitssensoren (4-7) angeschlossen. Über eine weitere Verbindungsleitung (26) ist das Anzeigegerät (2) angeschlossen. Alle Anschlusskabel bzw. Verbindungsleitungen sind in der Regel mehradrig, und zum Teil als CAN-Datenbus ausgebildet. Die Kabel sind über (nicht bezeichnete) Steckbuchsen an das EBS/ABS (16) bzw. das Anzeigegerät (2) angeschlossen.

Die Elektronik des EBS/ABS (16) besteht aus einer Auswerteschaltung (20), an welche die Radsensoren (4-7) sowie ein Mikrocontroller (18) angeschlossen sind. Ein solches EBS/ABS (16) ist für sich bekannt, und wird deshalb nicht näher erläutert.

Die Auswerteschaltung (20) des EBS/ABS (16) ist über eine Leitung (26) mit einer Auswerteschaltung (21) des Anzeigegerätes (2) verbunden. Die Auswertschaltung (21) enthält einen Kilometerzähler (17). Dieser besteht aus einfachen logischen Zählern, welche die Impulse der Radsensoren auch dann zählen, wenn das EBS/ABS (16) und das Anzeigegerät (2) nicht vom Motorwagen aus mit Betriebsspannung versorgt werden. Dies ist zum Beispiel dann der Fall, wenn der Motorwagen kein EBS/ABS besitzt, oder wenn die Buchse (12) nicht gesteckt ist. In diesem Fall wird die Elektronik der Auswerteschaltung (21) des Anzeigegerätes (2) von einer eingebauten Batterie (22) versorgt. Die Auswerteschaltung (21) ist weiter mit einem Mikrocontroller (19) sowie mit einem Display (3) verbunden. Auf letzterem kann unter anderem der Kilometerstand des Anhängerfahrzeugs (1) dargestellt werden.

Gemäß der Erfindung weist das Anzeigegerät (2) keinen separaten Anschluss (25) wie beim Stand der Technik zu einem Radsensor (4-7) auf. Stattdessen wird das Radgeschwindigkeits-Signal zunächst vom EBS/ABS (16) empfangen und dann zum Anzeigegerät (2) weitergeleitet. Hierzu wird das Drehzahlsignal eines Radsensors (7) über dessen Anschlussleitung (23) durch das EBS/ABS (16) durchgeschleift und über die Leitung (26) zum Anzeigegerät (2) weitergeleitet. Dabei kann das Drehzahlsignal des Radsensors (7) wahlweise über die Auswerteschaltung (20), oder direkt über eine separate (gestrichelt dargestellte) Leitung (27) geführt werden. In jedem Fall wird aber gewährleistet, dass das Durchschleifen des Drehzahlsignals durch die EBS/ABS-Elektronik auch bei fehlender Betriebsspannung des EBS/ABS (16) erfolgt.

Die Elektronik des Anzeigegerätes (2) ist vorteilhaft so ausgebildet, dass im Stand-Alone-Kilometerzählerbetrieb des Anzeigegerätes (2), wobei nur die Kilometer gezählt werden, dessen Mikrocontroller (19) nicht in Betrieb ist. Hierdurch wird Strom gespart, welcher entweder über die Leitung (26) vom Motorwagen oder, falls das Anhänger-EBS/ABS (16), wie oben erläutert, nicht in Betrieb ist, über die eingebaute Batterie (22) geliefert werden müsste. Dies bedeutet, dass im genannten Stand-Alone-Betrieb allein die Auswerteschaltung (21) mit Kilometerzähler (17), nicht aber der Mikrocomputer (19) von der eingebauten Batterie (22) versorgt wird. Hierdurch wird die Lebensdauer dieser Batterie verlängert. Zum Abrufen des Kilometerstandes wird am Anzeigegerät (2) eine (nicht dargestellte) Taste betätigt, woraufhin der Kilometerstand des Anhängerfahrzeugs auf dem Display (3) angezeigt wird.

Ein Kilometerstand des Anhängers wird auch durch das EBS/ABS (16) des Anhängers intern erfasst. Diese Erfassung läuft jedoch jeweils nur so lange, wie das EBS/ABS (16) mit Betriebsspannung versorgt wurde. Dieser Kilometerstand des EBS/ABS (16) kann sowohl auf einem Display im Motorwagen (nicht dargestellt) als auch auf dem Anzeigegerät (2) am Anhänger angezeigt werden. Durch Vergleich der beiden Kilometerstands-Anzeigen des EBS/ABS (16) und des Anzeigegerätes (2) kann festgestellt werden, wie lange der Anhänger (1) mit abgeschaltetem EBS/ABS (16) gefahren wurde.

## Patentansprüche

1. Anhängerfahrzeug (1) mit einem Anzeigesystem und mit einem elektronischen Bremssystem (EBS) und/oder einem Anti-Blockiersystem (ABS) (16), sowie mit einem separaten Anzeigegerät (2) mit Display (3) für mindestens den Kilometerstand des Anhängerfahrzeugs (1), und mit Radsensoren (4-7) zur Erfassung der Radgeschwindigkeiten der Räder (8-11) des Anhängerfahrzeugs (1), **dadurch gekennzeichnet, dass** das Drehzahlsignal mindestens eines Radsensors (4-7) durch das EBS/ABS (16) durchgeschleift und zum Anzeigegerät (2) weitergeleitet wird.

2. Anhängerfahrzeug nach Anspruch 1, **dadurch gekennzeichnet, dass** das Durchschleifen des Drehzahlsignals auch bei fehlender Betriebsspannung des EBS/ABS (16) erfolgt.

3. Anhängerfahrzeug nach Anspruch 1-2, **dadurch gekennzeichnet, dass** das Anzeigegerät (2) einen Kilometerzähler (17) enthält, der aus einfachen logischen Zählern besteht, die auch zählen, wenn das EBS/ABS (16) und das Anzeigegerät (2) nicht vom Motorwagen aus mit Betriebsspannung versorgt werden.

4. Anhängerfahrzeug nach Anspruch 1-3, **dadurch gekennzeichnet, dass** der Prozessor (19) des Anzeigegeräts (2) im Stand-Alone-Kilometerzählerbetrieb des Anzeigegeräts (2) nicht läuft.

## Claims

1. Trailer vehicle (1) having a display system and having an electronic brake system (EBS) and/or an antilock brake system (ABS) (16), and also having a separate display device (2) with a display (3) for at least the kilometre reading of the trailer vehicle (1), and having wheel sensors (4-7) for detecting the wheel speeds of the wheels (8-11) of the trailer vehicle (1), **characterized in that** the rotation speed signal of at least one wheel sensor (4-7) is connected through the EBS/ABS (16) and is forwarded to the display device (2).

2. Trailer vehicle according to Claim 1, **characterized in that** the rotation speed signal is also connected through when no operating voltage is applied to the EBS/ABS (16).

3. Trailer vehicle according to Claims 1 and 2, **characterized in that** the display device (2) contains a kilometre counter (17) which comprises simple logic counters which also count when the EBS/ABS (16) and the display device (2) are not supplied with operating voltage by the motor vehicle.

4. Trailer vehicle according to Claims 1-3, **characterized in that** the processor (19) of the display device (2) does not run during stand-alone kilometre counter operation of the display device (2).

## Revendications

1. Remorque (1) présentant un système d'affichage et d'un système électronique de freinage (EBS) et/ou un système antiblocage (ABS) (16) ainsi qu'un appareil séparé d'affichage (2) doté d'un écran (3) qui affiche au moins le kilométrage de la remorque (1) et des capteurs de roues (4-7) qui détectent la vitesse des roues (8-11) de la remorque (1),
**caractérisée en ce que**
le signal de vitesse de rotation d'au moins un capteur de roue (4-7) est mis en boucle par l'EBS/ABS (16) et transmis à l'appareil d'affichage (2).

2. Remorque selon la revendication 1, **caractérisée en ce que** la mise en boucle du signal de vitesse de rotation
a lieu même en l'absence de la tension d'alimentation de l'EBS/ABS (16).

3. Remorque selon la revendication 1 et 2, **caractérisée en ce que** l'appareil d'affichage (2) contient un compteur kilométrique (17) qui est constitué de simples compteurs logiques qui comptent également lorsque l'EBS/ABS (16) et l'appareil d'affichage (2) ne sont pas alimentés en tension d'alimentation par le tracteur.

4. Remorque selon les revendications 1 à 3, **caractérisée en ce que** le processeur (19) de l'appareil d'affichage (2) ne tourne pas lorsque l'appareil d'affichage (2) est en fonctionnement autonome de comptage kilométrique.
